Europäisches Patentamt

European Patent Office

Office européen des brevets

(19)

(11) Veröffentlichungsnummer: **0 171 360**
**B1**

(12) # EUROPÄISCHE PATENTSCHRIFT

(45) Veröffentlichungstag der Patentschrift:
**10.01.90**

(51) Int. Cl.⁴: **G 01 N 21/59, G 01 J 1/42,**
**G 01 N 21/47, G 01 N 21/25**

(21) Anmeldenummer: **85810355.9**

(22) Anmeldetag: **01.08.85**

(54) **Densitometer.**

(30) Priorität: **08.08.84 CH 3802/84**

(43) Veröffentlichungstag der Anmeldung:
**12.02.86 Patentblatt 86/7**

(45) Bekanntmachung des Hinweises auf die Patenterteilung:
**10.01.90 Patentblatt 90/2**

(84) Benannte Vertragsstaaten:
**CH DE FR GB IT LI NL**

(56) Entgegenhaltungen:
**US-A- 3 734 630**

(73) Patentinhaber: **GRETAG Aktiengesellschaft,**
**Althardstrasse 70, CH-8105 Regensdorf (CH)**

(72) Erfinder: **Weidmann, Markus, Ringstrasse 27,**
**CH-8172 Niederglatt (CH)**
Erfinder: **Ott, Hans, Ostring 54, CH-8105 Regensdorf**
**(CH)**
Erfinder: **Koch, Wilhelm Heinrich, Oberdorfstrasse 18,**
**CH-8112 Otelfingen (CH)**

(74) Vertreter: **Kleewein, Walter, Dr. et al, Patentabteilung**
**CIBA-GEIGY AG Postfach, CH-4002 Basel (CH)**

## Beschreibung

Die Erfindung betrifft ein Densitometer gemäss dem Oberbegriff des Patentanspruchs 1.

Praktisch alle heute verfügbaren Handdensitometer sind mit einer mehr oder weniger ausgeklügelten manuellen Messkopfabsenkung ausgestattet, welche es ermöglicht, den Messkopf von einer Ruhestellung, an der das Gerät am gewünschten Messort positioniert werden kann, in eine Arbeitsstellung zu bringen, in der dann die Messung stattfindet. Der Messkopf muss dabei naturgemäss mehr oder weniger weit parallel zur das Messobjekt tragenden Unterlage bewegt werden. Bei den bekannten Densitometern ist dazu stets auch eine Bewegung irgendeiner Handhabe oder zumindest eine Kraftaufwendung in Richtung parallel zur Unterlage erforderlich, wobei es aber oftmals zu einer unbeabsichtigten und wegen ihrer relativen Kleinheit auch vielfach unbemerkt bleibenden Verschiebung des Densitometers kommt. Damit verbunden sind Fehlpositionierungen und entsprechende Fehlmessungen.

In der US-PS No. 3 734 630 ist ein auch für den Handbetrieb geeignetes Spezialdensitometer beschrieben, das mit einem parallel zur Standfläche beweglichen Messkopf ausgestattet ist. Der Antrieb des Messkopfs erfolgt manuell über ein nicht näher erläutertes Gestänge durch zur Standfläche senkrecht gerichteten Druck auf ein ebenfalls nicht näher erläutertes Joch am Gehäuse. Bei diesem Densitometer ist die Gefahr von Positionierungsfehlern schon etwas geringer, jedoch ist dieses Densitometer in vielerlei Hinsicht noch verbesserungsfähig. Insbesondere ist der angedeutete primitive Antrieb des Messkopfs nicht ruckfrei und entspricht nicht den heutigen Präzisionserfordernissen, und ausserdem ist dieses Densitometer auch nicht zur Messung in mehreren Farbkanälen geeignet.

Weitere fotoelektrische Messgeräte mit beweglichen Messköpfen und anderen Teilen der Messanordnung sind in den US-PSen Nos. 3 535 046, 3 777 163, 4 173 416, 2 807 980 und 3 698 819 beschrieben. Keine dieser Druckschriften offenbart jedoch ein Handdensitometer, das dem hier zur Rede stehenden erfindungsgemässen Gerät irgendwie nahekommen könnte.

Durch die Erfindung soll nun das vorstehend dargelegte Problem beseitigt und ein Handdensitometer geschaffen werden, das sich problemlos positionieren lässt und bei dem keine Gefahr besteht, dass es sich während des Verbringens des Messkopfs in die Arbeitsstellung ungewollt auf der Unterlage verschiebt. Insbesondere soll die Messkopfbewegung präzis und ruckfrei erfolgen und der benötigte konstruktive Aufwand möglichst gering sein.

Das erfindungsgemässe Handdensitometer ist im Patentanspruch 1 beschrieben. Besonders vorteilhafte Ausführungsformen und Weiterbildungen ergeben sich aus den abhängigen Ansprüchen.

Im folgenden wird ein Ausführungsbeispiel eines erfindungsgemässen Densitometers anhand der Zeichnung näher erläutert. Es zeigen:

Fig. 1 einen Längsschnitt durch das Handdensitometer mit eingefahrenem Messkopf,

Fig. 2 einen teilweise abgebrochenen Längsschnitt analog Fig. 1, jedoch mit ausgefahrenem Messkopf,

Fig. 3 einen Horizontalschnitt etwa nach der Linie III–III der Fig. 1,

Fig. 4 einen Längsschnitt durch den Messwagen nach der Linie IV–IV der Fig. 3,

Fig. 5 einen Vertikalschnitt durch das Densitometer etwa nach der Linie V–V der Fig. 3,

Fig. 6a–6e fünf Skizzen zur Erläuterung des Antriebs des Messwagens und

Fig. 7 eine Darstellung analog Fig. 4 einer Ausführungsvariante.

Das dargestellte Handdensitometer ist von im wesentlichen quadrischer äusserer Gestalt. Sein Gehäuse 1 besteht aus einem Bodenteil 11 und einem darauf befestigten Deckel 12. Beide Teile bestehen vorzugsweise aus Kunststoff.

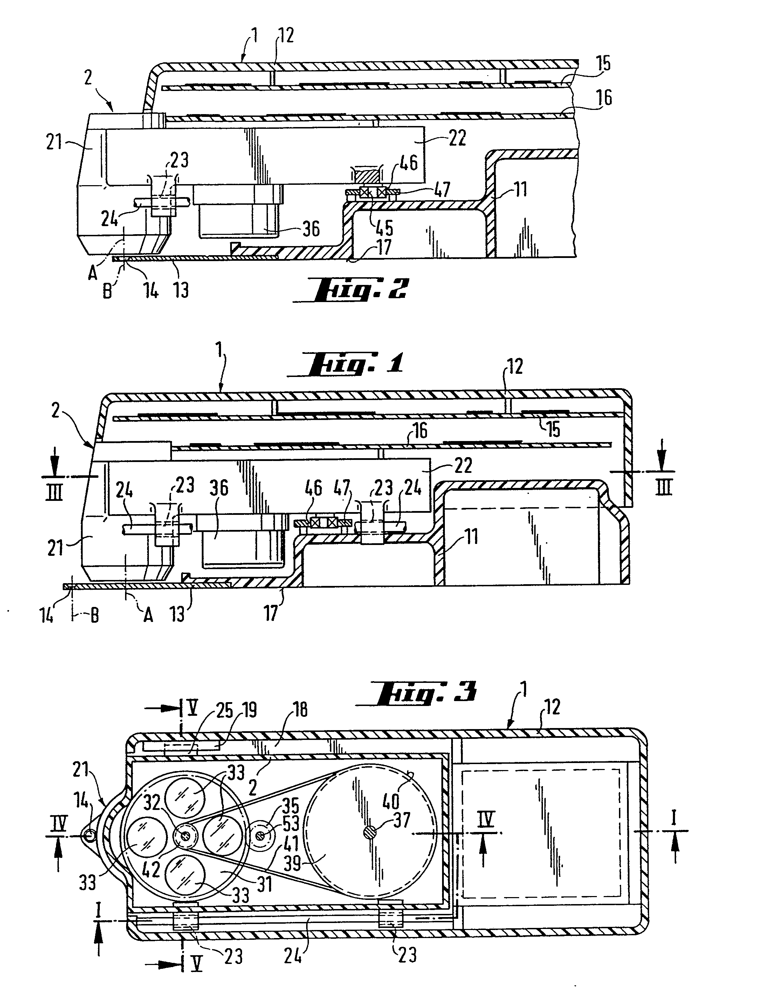

Im Gehäuse 1 ist ein als Ganzes mit 2 bezeichneter Messwagen angeordnet. Er befindet sich normalerweise in der in Fig. 1 gezeigten, eingefahrenen Ruhestellung und kann zum Betrieb des Handdensitometers in die in Fig. 2 gezeigte Arbeitsstellung ausgefahren werden. In dieser Stellung fluchtet die Achse A des im Messwagen befindlichen Densitometermesskopfs mit der Achse B einer in einer Visierplatte 13 befindlichen Messblende 14.

Die Visierplatte 13 und der untere Begrenzungsrand 17 des Gehäusebodenteils 11 liegen in einer Ebene und bilden eine ebene Standfläche, mit der das Densitometer auf die in der Regel ebene, das Messobjekt tragende Unterlage gestellt wird.

Im Gehäuse 1 befinden sich ferner zwei Printplatten 15 und 16, welche die (nicht dargestellten) elektronischen Bauteile des Densitometers tragen. Die obere Platte 15 ist im Gehäusedeckel 12 befestigt, die untere Platte 16 ist mit dem Messwagen 2 verbunden und bewegt sich mit diesem mit.

Das dargestellte Densitometer stimmt in seiner äusseren Erscheinung und bezüglich Mess-Optik und Elektronik weitestgehend mit dem unter der Bezeichnung «D 142» von der Fa. Gretag AG, Regensdorf, Schweiz vertriebenen Handdensitometer überein. Der einzige wesentliche Unterschied besteht im ausfahrbaren Messwagen und seinem Antrieb. Die folgenden Ausführungen beschränken sich daher im wesentlichen auf diese Teile.

Der Messwagen 2 besteht aus einem vorderen, tubusförmigen Teil 21 und einem hinteren, quadrischen Teil 22. Ersterer bildet bzw. enthält den eigentlichen Messkopf, während der letztere die für den Antrieb des Messwagens nötigen Teile enthält bzw. trägt.

Der Messwagen 2 ist, wie schon erwähnt, verschiebbar im Densitometergehäuse angeordnet.

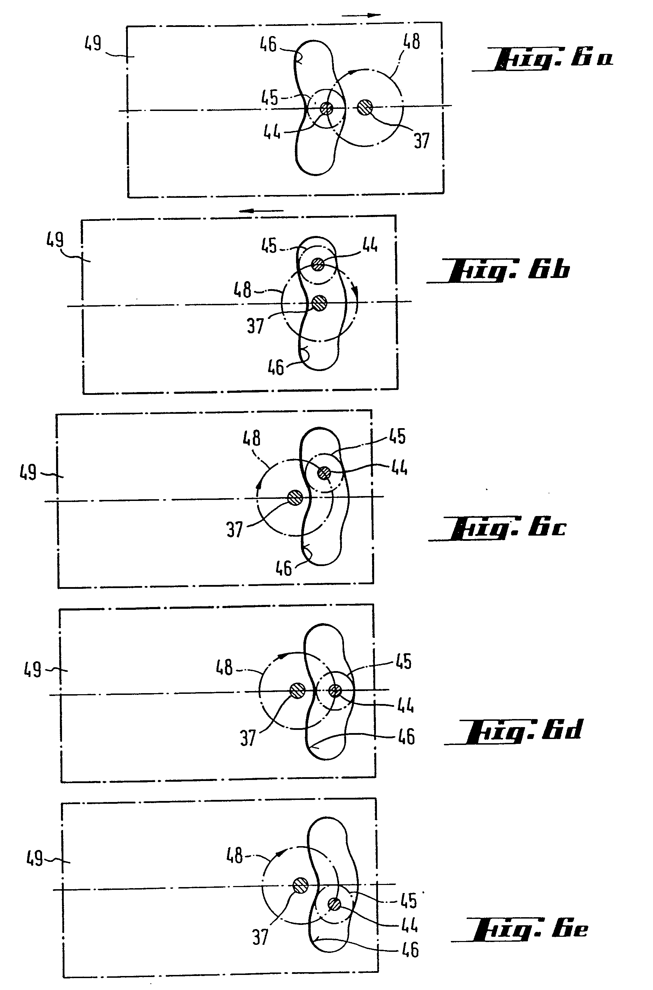

Er ist dazu seitlich mit zwei Gleitbüchsen 23 versehen, welche auf einer im Gehäusebodenteil 11 befestigten Führungsstange 24 gleiten und den Messwagen dadurch geradlinig führen. Auf der den Gleitbüchsen 23 gegenüberliegenden Seite weist der Messwagen 2 eine Führungsleiste 25 auf. Diese gleitet auf einem am Gehäuseunterteil 11 ausgebildeten Auflager 18 und wird von einer Führungsrippe 19 (siehe auch Fig. 5) niedergehalten.

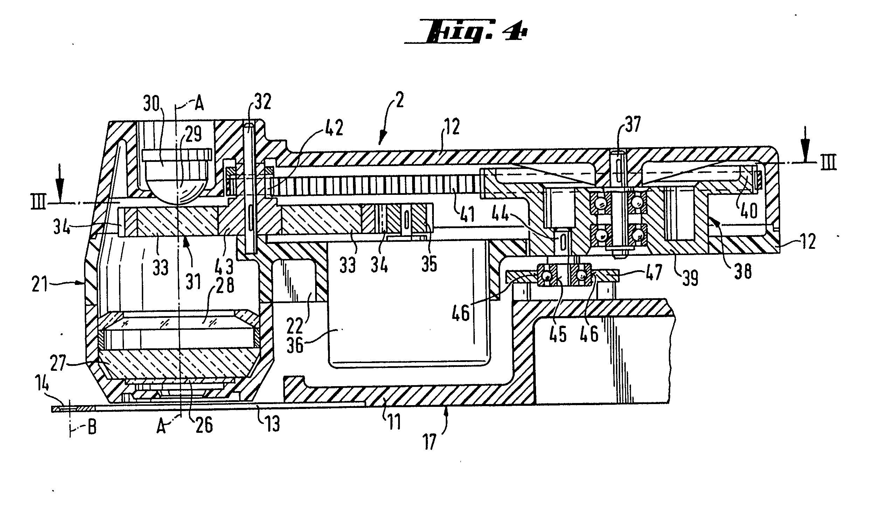

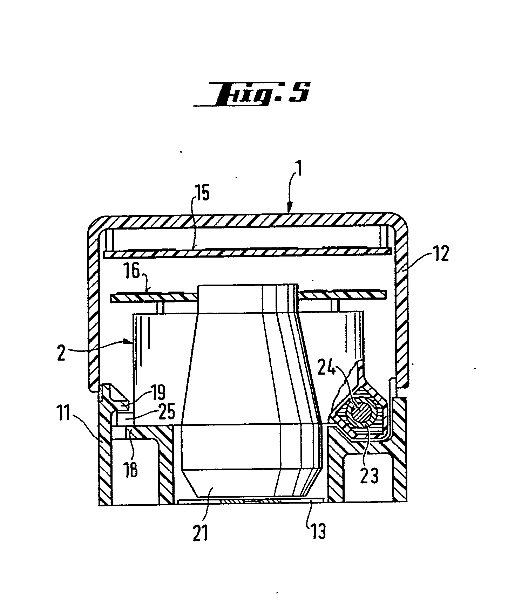

Im tubusförmigen Messkopf 21 des Messwagens 2 befinden sich diverse Linsen und andere optische Komponenten 26–29 sowie eine Fotodiode 30 als lichtelektrischer Wandler. Ferner ist ein Filterrad 31 vorgesehen, welches um eine Achse 32 drehbar ist, so dass seine vier Messfilter 33 hintereinander in den Messstrahlengang eingeführt werden können (Fig. 3, 4).

Das Filterrad 31 trägt eine Aussenverzahnung 34, die mit dem Ritzel 35 eines im hinteren Teil 22 des Messwagens 2 montierten Antriebsmotors 36 kämmt. Am hinteren Ende des Teils 22 des Messwagens 2 ist um eine Achse 37 ein Antriebsteller 38 drehbar gelagert. Er weist einen scheibenförmigen Zentralteil 39 und einen zylindrischen, verzahnten Umfangsteil 40 auf und ist über einen an seinem Umfangsteil 40 angreifenden Zahnriemen 41 angetrieben, der seinerseits mit einer gezahnten Riemenscheibe 42 an der Nabe 43 des Filterrads 31 in Eingriff steht. Der Antriebsteller 38 wird somit ebenfalls vom Motor 36 angetrieben. Das Übersetzungsverhältnis zwischen Filterrad 31 und Antriebsteller 38 beträgt etwa 1:7, dasjenige zwischen Motor 36 und Filterrad 31 etwa 1:5.

Am Zentralteil 39 des Antriebstellers 38 ist exzentrisch eine Welle 44 befestigt, an der wiederum ein Kulissengleiter in Form eines Kugellagers 45 frei drehbar montiert ist. Dieser Kulissengleiter greift in den Führungsschlitz 46 einer am Gehäusebodenteil 11 befestigten plattenförmigen Kulisse 47 ein.

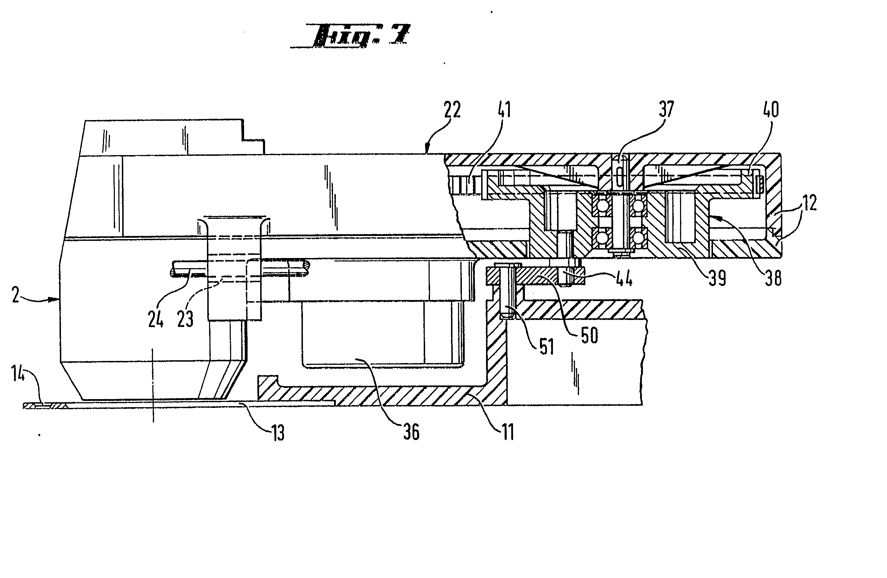

Die Form des Führungsschlitzes 46 in der Kulisse 47 sowie die Funktionsweise des aus Antriebsteller 38, Kulissengleiter 45 und Kulisse 47 gebildeten Kulissenantriebs gehen aus den Fig. 6a–6e hervor. Darin bezeichnen 48 den kreisförmigen Weg des Kulissengleiters 45 bei einer vollständigen Umdrehung des Antriebstellers 38 um die Achse 37 und 49 symbolisch den Messwagen 2.

Fig. 6a zeigt die Ruhestellung, bei der der Messwagen 2 gemäss Fig. 1 oder Fig. 4 komplett eingefahren ist. Durch Starten des Motors 36 (mittels eines nicht dargestellten Schalters) wird ein Messzyklus eingeleitet. Der Antriebsteller 38 dreht sich dabei in Pfeilrichtung und bewirkt dadurch eine Verschiebung des Messwagens 2 (Umriss 49) nach links (Fig. 6b, 6c). Nach rund 135° Drehung des Antriebstellers 38 ist der Messwagen vollständig ausgefahren und hat die Arbeitsstellung erreicht. Bei der Weiterdrehung des Antriebstellers 38 bis zu ca. 225° (Fig. 6e) ändert sich die Position des Messwagens aufgrund der speziellen Form des Führungsschlitzes 46 in der Kulisse praktisch nicht. Von Drehstellung ca. 135° bis Drehstellung ca. 225°, also während rund einer Vierteldrehung, erfolgt (in herkömmlicher Weise) die densitometrische Messung, wobei aufgrund des gewählten Übersetzungsverhältnisses von Antriebsteller 38 und Filterrad 31 letzteres zwei Umdrehungen macht und somit mit jedem Filter 33 zwei Messungen durchgeführt werden können. Danach bewegt sich der Messwagen 2 bei der weiteren Drehung des Antriebstellers 38 wieder in die in Fig. 6a gezeigte Anfangs- bzw. Ruhestellung zurück, und der Antriebsmotor 36 wird automatisch abgeschaltet.

Der eben beschriebene Kulissenantrieb lässt sich durch entsprechende Formgebung des Kulissenschlitzes 46 optimal an die speziellen Gegebenheiten eines Densitometers anpassen. Insbesondere kann ein ruckfreier Bewegungsablauf bei relativ hohen Geschwindigkeiten erzielt werden, wobei ausserdem auch noch die Stillstandszeit des Messkopfs weitestgehend frei gewählt werden kann.

Ein etwas einfacherer Antrieb mit weniger Freiheitsgraden lässt sich auch gemäss Fig. 7 realisieren. Hier ist auf der exzentrischen Welle 44 im Zentralteil 39 des Antriebstellers 38 eine Schubstange 50 drehbar gelagert, deren anderes Ende mittels eines Zapfens 51 drehbar am Gehäusebodenteil 11 befestigt ist. Mit dieser Kinematik ergibt sich ein sinusförmiger Bewegungsablauf, wobei die Geschwindigkeit nahe den beiden Extrempositionen am geringsten ist.

Selbstverständlich sind auch noch andere Antriebsvarianten möglich. So ist es zum Beispiel auch denkbar, für das Filterrad einen eigenen Antrieb vorzusehen.

## Patentansprüche

1. Densitometer mit einer Standfläche (13, 17) zur Auflage auf einer ebenen Messfläche sowie mit einem im wesentlichen geradlinig und parallel zur Standfläche in einem Gehäuse verschiebbar angeordneten Messkopf (21), der zwischen einer Positionierung des Densitometers auf der Messfläche dienende Messblende (14) für den Benutzer sichtbar ist, und einer Arbeitsposition, in der er diese Messblende überdeckt, hin und her bewegbar ist, dadurch gekennzeichnet, dass der Messkopf (21) in einem motorisch verschiebbar im Gehäuse (1) des Densitometers gelagerten Messwagen (2) angeordnet ist, dass ein Antriebsmotor (36) für den Messwagen (2) in bzw. an diesem befestigt und mit diesem mitbeweglich ist, dass zum Antrieb des Messwagens (2) ein vom Antriebsmotor (36) betätigtes Kurbelstangengetriebe (38, 50) oder ein Kulissenantrieb (38, 45, 47) vorgesehen ist, und dass der Antrieb des Messwagens (2) so ausgebildet ist, dass der Messkopf (21) auch bei laufendem Antriebsmotor (36) während der Messdauer praktisch bewegungslos in der Arbeitsposition stillsteht.

2. Densitometer nach Anspruch 1, dadurch gekennzeichnet, dass der Messkopf (21) ein motorisch drehbar angetriebenes Filterrad (31) mit verschiedenen Messfiltern (33) aufweist, und dass das Filterrad (31) vom selben Antriebsmotor (36) angetrieben ist wie der Messwagen (2).

3. Densitometer nach Anspruch 2, dadurch gekennzeichnet, dass sich das Filterrad (31) während der Messdauer wenigstens einmal vollständig dreht.

4. Densitometer nach Anspruch 1, dadurch gekennzeichnet, dass im Messwagen (2) ein motorisch angetrieben auf einer Kreisbahn umlaufendes Kulissenfolgeglied (45) vorgesehen ist, welches in eine im Gehäuse (11) ortsfeste Kulisse (47) eingreift.

5. Densitometer nach einem der Ansprüche 1–4, dadurch gekennzeichnet, dass der Messwagen (2) an einer im Gehäuse (1) befestigten Gleitstange (24) geführt ist.

## Claims

1. A densitometer having a support surface (13, 17) for resting on a flat measuring surface and a measuring head (21) which is disposed so as to be displaceable in a housing substantially rectilinear and parallel to said support surface, which head is movable back and forth between a rest position in which a measuring diaphragm (14) which serves to position the densitometer on the measuring surface is visible to the user, and an operating position in which said head covers said measuring diaphragm, characterised in that the measuring head (21) is disposed in a measuring carriage (2) which is mounted in the housing (1) of the densitometer so that it can be displaced by a motor, that a drive motor (36) for the measuring carriage (2) is attached in or to said carriage and is movable jointly with said carriage, that a connecting-rod gear (38, 50) or a crank drive (38, 45, 47) operated by the drive motor (36) is provided to drive the measuring carriage (2), and that the drive of the measuring carriage (2) is designed so that the measuring head (21) is stopped practically motionless in the operating position during the measuring period, even when the drive motor (36) is running.

2. A densitometer according to Claim 1, characterised in that the measuring head (21) has a motor-driven rotatable filter wheel (31) with different measuring filters (33), and that the filter wheel (31) is driven by the same drive motor (36) as the measuring carriage (2).

3. A densitometer according to Claim 2, characterised in that the filter wheel (31) rotates completely at least once during the measuring period.

4. A densitometer according to Claim 1, characterised in that a motor-driven slotted follower element (45) which circulates on a circular path is provided in the measuring carriage (2), which element engages in a stationary slotted link (47) in the housing (11).

5. A densitometer according to one of Claims 1 to 4, characterised in that the measuring carriage (2) is guided on a slide rod (24) which is attached in the housing (1).

## Revendications

1. Densitomètre comportant une surface d'appui (13, 17) destinée à sa mise en place sur une surface plane à mesurer, ainsi qu'une tête (21) de mesure disposée de façon à pouvoir être déplacée dans un boîtier de façon sensiblement rectiligne et parallèlement à la surface d'appui, cette tête pouvant être déplacée en va-et-vient entre une position de repos, dans laquelle un diaphragme (14) de mesure servant au positionnement du densitomètre sur la surface à mesurer, est visible par l'utilisateur, et une position de travail dans laquelle elle recouvre ce diaphragme de mesure, densitomètre caractérisé en ce que la tête (21) de mesure est disposée dans un chariot (2) de mesure monté de façon à pouvoir être déplacé en translation, au moyen d'un moteur dans le boîtier (1) du densitomètre; en ce qu'un moteur (36) d'entraînement, destiné au chariot (2) de mesure, est fixé dans celui-ci, ou à celui-ci, et peut se déplacer avec celui-ci; en ce que, pour l'entraînement du chariot (2) de mesure, on prévoit un mécanisme à manivelle (38, 50) actionné par le moteur (36) d'entraînement ou un entraînement à coulisse (38, 45, 47), et en ce que l'entraînement du chariot (2) de mesure est conformé de façon telle que la tête (21) de mesure reste à l'arrêt pratiquement immobile en position de travail pendant la durée de la mesure même pendant que le moteur (36) d'entraînement est en marche.

2. Densitomètre selon la revendication 1, caractérisé en ce que la tête (21) de mesure présente un disque (31) comportant différents filtres (33) de mesure et pouvant être entraîné en rotation au moyen d'un moteur, et en ce que le disque (31) porte-filtres est entraîné par le même moteur (36) d'entraînement que le chariot (2) de mesure.

3. Densitomètre selon la revendication 2, caractérisé en ce que le disque (31) porte-filtres tourne complètement au moins une fois pendant la durée de la mesure.

4. Densitomètre selon la revendication 1, caractérisé en ce que l'on prévoit dans le chariot (2) de mesure un élément (45) de coulisse, entraîné par un moteur, tournant sur un trajet circulaire, et qui pénètre dans une glissière ou coulisse (47) fixe ménagée dans le boîtier (11).

5. Densitomètre selon une des revendications 1 à 4, caractérisée en ce que le chariot (2) de mesure est guidé sur une barrette (24) de coulissement fixée dans le boîtier (1).

*Fig. 2*

*Fig. 1*

*Fig. 3*

Fig. 1

# Fig. 5

49    46        48
                        _Fig: 6a_

45
44        37

49    45    44
48
37        _Fig: 6b_
46

48        45
44
49
37        _Fig: 6c_
46

48        45
49
44
37    46        _Fig: 6d_

48        45
49
44
37    46        _Fig: 6e_

Fig. 1